# EUROPEAN PATENT APPLICATION

(11) **EP 4 832 373 A2**
(43) Date of publication of application: **28.10.2026**
(21) Application number: 26186622.2
(22) Date of filing: 24.03.2023
(51) Int. Cl.: H04B 7/185

(54) **SATELLITE COMMUNICATION METHOD AND APPARATUS**

(30) Priority: 27.03.2022 CN 202210309468
(62) Document number(s) of the earlier application(s) in accordance with Art. 76 EPC: 23778054.9 / 4 492 853
(71) Applicant: Huawei Technologies Co., Ltd., Shenzhen, Guangdong 518129 (CN)
(72) Inventor: Li, Yongcui, Shenzhen, 518129 (CN); Ni, Hui, Shenzhen, 518129 (CN)
(74) Representative: Thun, Clemens

(57) **Abstract**

This application provides a satellite communication method and an apparatus. The method may include: A session management network element obtains an identifier list. The identifier list includes identification information of one or more terminal devices that access a satellite in a satellite backhaul manner. The session management network element configures a forwarding rule for a user plane network element on the satellite. The forwarding rule is used to offload, to an access network device corresponding to the terminal device, a data packet whose destination address is included in an address of the terminal device corresponding to the identifier list. Based on the foregoing solution, a terminal device that supports local switching in the satellite can perform communication through local switching in the satellite, so that a delay can be reduced and user experience can be improved.

## Description

This application claims priority to Chinese Patent Application No. 202210309468.3, filed with the China National Intellectual Property Administration on March 27, 2022 and entitled "SATELLITE COMMUNICATION METHOD AND APPARATUS", which is incorporated herein by reference in its entirety.

### TECHNICAL FIELD

This application relates to the field of communication technologies, and in particular, to a satellite communication method and an apparatus.

### BACKGROUND

Currently, an important scenario to which a technology of integrating satellite communication with a 5G communication system (5G communication system, 5GS) can be applied is satellite backhaul (satellite backhaul, SATB). To be specific, a satellite link serves as a satellite backhaul link, and an access network device communicates with a core network device through the satellite backhaul link. However, in the scenario, when two UEs that access a network in a satellite backhaul manner communicate with each other, a delay is usually high, resulting in poor user experience. How to reduce a delay of end-to-end transmission in a satellite communication scenario is a problem that needs to be considered.

### SUMMARY

This application provides a satellite communication method and an apparatus, to reduce a transmission delay between terminal devices in a satellite communication scenario.

According to a first aspect, a satellite communication method is provided. The method may be performed by a session management network element, or may be performed by a component (for example, a chip or a circuit) of the session management network element. This is not limited herein. For ease of description, the following uses an example in which the method is performed by the session management network element for description.

The communication method includes: The session management network element obtains an identifier list. The identifier list includes identification information of one or more terminal devices that access a satellite in a satellite backhaul manner. The session management network element configures a forwarding rule for a user plane network element on the satellite. The forwarding rule is used to offload, to an access network device corresponding to the terminal device, a data packet whose destination address is included in an address of the terminal device corresponding to the identifier list.

Based on the foregoing solution, the session management network element may configure the forwarding rule for the user plane network element on the satellite, so that the user plane network element sends, to the access network device corresponding to the terminal device, the data packet whose destination address is included in the address of the terminal device corresponding to the identifier list. In other words, for the terminal device in the identifier list, the data packet sent to the terminal device may be directly sent by the user plane network element on the satellite to the corresponding access network device without using a terrestrial anchor access network device. Therefore, a data transmission path can be shortened, and a transmission delay can be reduced.

With reference to the first aspect, in some implementations of the first aspect, that the session management network element obtains the identifier list includes: The session management network element receives the identifier list from a data management network element or a mobility management network element.

Based on the foregoing solution, the session management network element may obtain the identifier list via the data management network element or the mobility management network element, to configure the forwarding rule for the user plane network element on the satellite based on the identifier list.

With reference to the first aspect, in some implementations of the first aspect, before the session management network element receives the identifier list from the data management network element, the method further includes: The session management network element sends a request message to the data management network element. The request message includes related information of the satellite. The request message requests to obtain the identifier list.

Based on the foregoing solution, the session management network element may send, to the data management network element, the request message carrying the related information of the satellite, so that the data management network element sends, to the session management network element, the identifier list corresponding to the related information of the satellite.

With reference to the first aspect, in some implementations of the first aspect, the method further includes: The session management network element receives a session context establishment request message from the mobility management network element. The session context establishment request message includes identification information of a first terminal device. The first terminal device accesses the satellite in the satellite backhaul manner. The session management network element obtains the related information of the satellite. The session management network element sends a registration message to the data management network element. The registration message includes the identification information of the first terminal device and the related information of the satellite.

Based on the foregoing solution, when the first terminal device establishes a session via the session management network element, if the session management network element determines that the first terminal device accesses the satellite in the satellite backhaul manner, the session management network element may register the identification information of the first terminal device and the related information of the satellite with the data management network element, so that the data management network element can store the foregoing identifier list.

With reference to the first aspect, in some implementations of the first aspect, the method further includes: The session management network element determines that the first terminal device is allowed to perform local switching in the satellite.

Based on the foregoing solution, when determining that the first terminal device supports local switching in the satellite, the session management network element may register the identification information of the first terminal device and the related information of the satellite with the data management network element, so that the identifier list can include identification information of one or more terminal devices that are allowed to perform local switching in the satellite. Therefore, the session management network element may configure the forwarding rule for the user plane network element on the satellite, to implement local switching in the satellite of the terminal devices.

With reference to the first aspect, in some implementations of the first aspect, that the session management network element obtains the related information of the satellite includes: The session management network element receives the related information of the satellite from the mobility management network element.

With reference to the first aspect, in some implementations of the first aspect, that the session management network element obtains the related information of the satellite includes: The session management network element determines the related information of the satellite based on location information of the terminal device.

Based on the foregoing solution, the session management network element may obtain the identification information of the satellite via the mobility management network element, or may determine the related information of the satellite based on the identification information of the terminal device, to obtain the identifier list corresponding to the related information of the satellite.

With reference to the first aspect, in some implementations of the first aspect, the method further includes: The session management network element sends a subscription message to the data management network element. The subscription message includes the related information of the satellite. The subscription message is used to subscribe to a change notification of the identifier list.

Based on the foregoing solution, the session management network element may subscribe to the change notification of the identifier list from the data management network element. In other words, when a new terminal device is registered with the identifier list, or an original terminal device is deregistered from the identifier list, a group management network element needs to notify the session management network element. Based on this, the session management network element may update the forwarding rule to the user plane network element on the satellite based on an updated session identifier list, so that a terminal device that accesses the satellite in the satellite backhaul manner and that supports local switching in the satellite can perform communication through local switching in the satellite. Therefore, a transmission delay can be reduced and user experience can be improved.

With reference to the first aspect, in some implementations of the first aspect, the related information of the satellite may be any one of the following information: a data network access identifier corresponding to the satellite, an identifier of the satellite, and an internet protocol address of the satellite.

According to a second aspect, a satellite communication method is provided. The method may be performed by a mobility management network element, or may be performed by a component (for example, a chip or a circuit) of the mobility management network element. This is not limited herein. For ease of description, the following uses an example in which the method is performed by the mobility management network element for description.

The communication method includes: The mobility management network element receives an identifier list from a data management network element. The identifier list includes identification information of one or more terminal devices that access a satellite in a satellite backhaul manner. The mobility management network element sends the identifier list to a session management network element.

Based on the foregoing solution, the mobility management network element may provide, for the session management network element, an identifier list corresponding to related information of the satellite, so that the session management network element can configure a forwarding rule for a user plane network element on the satellite based on the identifier list. Therefore, the user plane network element sends, to an access network device corresponding to the terminal device, a data packet whose destination address is included in an address of the terminal device corresponding to the identifier list, so that a data transmission path can be shortened and a transmission delay can be reduced.

With reference to the second aspect, in some implementations of the second aspect, before the mobility management network element receives the identifier list from the data management network element, the method further includes: The mobility management network element sends a request message to the data management network element. The request message includes related information of the satellite. The request message requests to obtain the identifier list.

Based on the foregoing solution, the mobility management network element may request, from the data management network element, the identifier list corresponding to the related information of the satellite, to provide the identifier list for the session management network element.

With reference to the second aspect, in some implementations of the second aspect, the method further includes: The mobility management network element receives a session establishment request message from a first terminal device. The session establishment request message includes identification information of the first terminal device. The first terminal device accesses the satellite in the satellite backhaul manner. The mobility management network element determines the related information of the satellite based on location information of the first terminal device. The mobility management network element sends a registration message to the data management network element. The registration message includes the identification information of the first terminal device and the related information of the satellite.

Based on the foregoing solution, the mobility management network element may register the identification information of the first terminal device and the related information of the satellite with the data management network element in a session establishment process of the first terminal device, so that the data management network element can generate and store the identifier list corresponding to the related information of the satellite.

With reference to the second aspect, in some implementations of the second aspect, the method further includes: The session management network element determines that the first terminal device is allowed to perform local switching in the satellite.

Based on the foregoing solution, when the first terminal device is determined to be allowed to perform local switching in the satellite, the mobility management network element may register the identification information of the first terminal device with the data management network element, so that the terminal device corresponding to the identifier list supports local switching in the satellite.

With reference to the second aspect, in some implementations of the second aspect, the method further includes: The mobility management network element sends a subscription message to the data management network element. The subscription message includes the related information of the satellite. The subscription message is used to subscribe to a change notification of the identifier list.

Based on the foregoing solution, the mobility management network element may subscribe to the change notification of the identifier list from the data management network element. In other words, when a new terminal device is registered with the identifier list, or an original terminal device is deregistered from the identifier list, a group management network element needs to notify the mobility management network element. Based on this, the mobility management network element may send an updated identifier list to the session management network element. In this way, the session management network element may update the forwarding rule to the user plane network element on the satellite based on the updated session identifier list, so that a terminal device that accesses the satellite in the satellite backhaul manner and that supports local switching in the satellite can perform communication through local switching in the satellite. Therefore, a transmission delay can be reduced and user experience can be improved.

According to a third aspect, a satellite communication method is provided. The method may be performed by a data management network element, or may be performed by a component (for example, a chip or a circuit) of the data management network element. This is not limited herein. For ease of description, the following uses an example in which the method is performed by the data management network element for description.

The satellite communication method includes: The data management network element receives a request message from a first network element. The request message includes related information of a satellite. The data management network element determines, based on the related information of the satellite, an identifier list corresponding to identification information of the satellite. The identifier list includes identification information of one or more terminal devices that access the satellite in a satellite backhaul manner. The data management network element sends the identifier list to the first network element in response to the request message.

Based on the foregoing solution, the data management network element may send, to the first network element based on a request of the first network element, the identifier list corresponding to the satellite, so that a session management network element can configure a forwarding rule for a user plane network element on the satellite based on the identifier list. Therefore, the user plane network element sends, to an access network device corresponding to the terminal device, a data packet whose destination address is included in an address of the terminal device corresponding to the identifier list, so that a data transmission path can be shortened and a transmission delay can be reduced.

The first network element herein may be the session management network element or a mobility management network element.

With reference to the third aspect, in some implementations of the third aspect, the method further includes: The data management network element receives a registration message from the first network element. The registration message includes identification information of a first terminal device and the related information of the satellite. The data management network element stores the identification information of the first terminal device in the identifier list.

Based on the foregoing solution, the first session management network element may register the identification information of the first terminal device and the related information of the satellite with the data management network element. In this way, the data management network element updates the identifier list, so that the first terminal device can perform local switching in the satellite, to reduce a transmission delay.

With reference to the third aspect, in some implementations of the third aspect, the method further includes: The data management network element receives a subscription message from the first network element. The subscription message includes the related information of the satellite. The subscription message is used to subscribe to a change notification of the related information of the satellite.

Based on the foregoing solution, the first network element may subscribe to the change notification of the identifier list from the data management network element. In this case, after the identifier list is updated, the data management network element may send an updated identifier list to the first network element, so that the session management network element can configure a new forwarding rule for the user plane network element on the satellite based on the updated identifier list.

With reference to the third aspect, in some implementations of the third aspect, the first network element is a session management network element or a mobility management network element.

According to a fourth aspect, a communication apparatus is provided. The apparatus is configured to perform any method provided in the first aspect to the third aspect. Specifically, the apparatus may include a unit and/or a module configured to perform the methods provided in the first aspect to the third aspect, for example, a processing module and/or a transceiver module (which may also be referred to as a communication module). In an implementation, the apparatus is a network device. For example, the apparatus is a session management network element, a mobility management network element, or a data management network element. When the apparatus is the network device, the communication module may be a transceiver or an input/output interface, and the processing module may be a processor.

In an implementation, the apparatus is a chip, a chip system, or a circuit used in a network device. When the apparatus is the chip, the chip system, or the circuit used in a communication device, the communication module may be an input/output interface, an interface circuit, an output circuit, an input circuit, a pin, a related circuit, or the like on the chip, the chip system, or the circuit. The processing module may be a processor, a processing circuit, a logic circuit, or the like.

In a possible case, the apparatus is a session management network element, or a chip, a chip system, or a circuit in the session management network element. In this case, the apparatus may include a unit and/or a module configured to perform the method in the first aspect, for example, a processing unit and/or a communication unit.

In another possible case, the apparatus is a mobility management network element, or a chip, a chip system, or a circuit in the mobility management network element. In this case, the apparatus may include a unit and/or a module configured to perform the method in the second aspect, for example, a processing module and/or a transceiver module.

In still another possible case, the apparatus is a data management network element, or a chip, a chip system, or a circuit in the data management network element. In this case, the apparatus may include a unit and/or a module configured to perform the method in the third aspect, for example, a processing module and/or a transceiver module.

According to a fifth aspect, a communication apparatus is provided. The apparatus includes: a memory, configured to store a program; and a processor, configured to execute the program stored in the memory. When the program stored in the memory is executed, the processor is configured to perform any method in the first aspect to the third aspect.

According to a sixth aspect, this application provides a processor, configured to perform the methods in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the foregoing information, the processor outputs the foregoing information to a transceiver, so that the transceiver performs transmission. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, receiving the request message mentioned in the foregoing method may be understood as that the processor receives input information.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the foregoing processor may be a processor specially configured to perform these methods, or may be a processor, for example, a general-purpose processor, that executes computer instructions in a memory to perform these methods. The foregoing memory may be a non-transitory (non-transitory) memory such as a read-only memory (read-only memory, ROM). The memory and the processor may be integrated on a same chip, or may be separately disposed on different chips. A type of the memory and a manner of disposing the memory and the processor are not limited in this embodiment of this application.

According to a seventh aspect, a computer-readable storage medium is provided. The computer-readable medium stores program code to be executed by a device, and the program code is used to perform any method provided in the first aspect to the third aspect.

According to an eighth aspect, a computer program product including instructions is provided. When the computer program product runs on a computer, the computer is enabled to perform any method provided in the first aspect to the third aspect.

According to a ninth aspect, a chip is provided. The chip includes a processor and a communication interface. The processor reads, through the communication interface, instructions stored in a memory, to perform any method provided in the first aspect to the third aspect.

Optionally, in an implementation, the chip may further include a memory. The memory stores instructions. The processor is configured to execute the instructions stored in the memory. When the instructions are executed, the processor is configured to perform any method provided in the first aspect to the third aspect.

According to a tenth aspect, a communication system is provided, and includes one or more of the foregoing session management network element, mobility management network element, and data management network element.

### BRIEF DESCRIPTION OF DRAWINGS

FIG. 1 is a schematic diagram of a network architecture applicable to an embodiment of this application;
FIG. 2 is a schematic diagram of a communication architecture of a satellite backhaul link;
FIG. 3 is a schematic diagram of a communication architecture of local switching in a satellite;
FIG. 4 is a schematic flowchart of a communication method according to an embodiment of this application;
FIG. 5 is a schematic flowchart of another communication method according to an embodiment of this application;
FIG. 6 is a schematic flowchart of still another communication method according to an embodiment of this application;
FIG. 7 is a schematic block diagram of a communication apparatus according to an embodiment of this application;
FIG. 8 is a schematic block diagram of a communication apparatus according to another embodiment of this application; and
FIG. 9 is a schematic block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in this application are merely used for differentiation for ease of description, and are not used to limit the scope of this application. Sequence numbers of the foregoing processes do not mean execution sequences, and the execution sequences of the processes should be determined based on functions and internal logic of the processes.

In the specification, claims, and accompanying drawings of this application, the terms "first", "second", "third", "fourth", and various other ordinal number terms (if existent) are intended to distinguish between similar objects but do not necessarily indicate a specific order or sequence. It should be understood that the data used in this way is interchangeable in an appropriate circumstance, so that embodiments described herein can be implemented in an order other than the order illustrated or described herein. In addition, the terms "include" and "have" and any other variants are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, or machine type communication (machine type communication, MTC), and applied to an internet of things (internet of things, IoT) communication system, or another communication system.

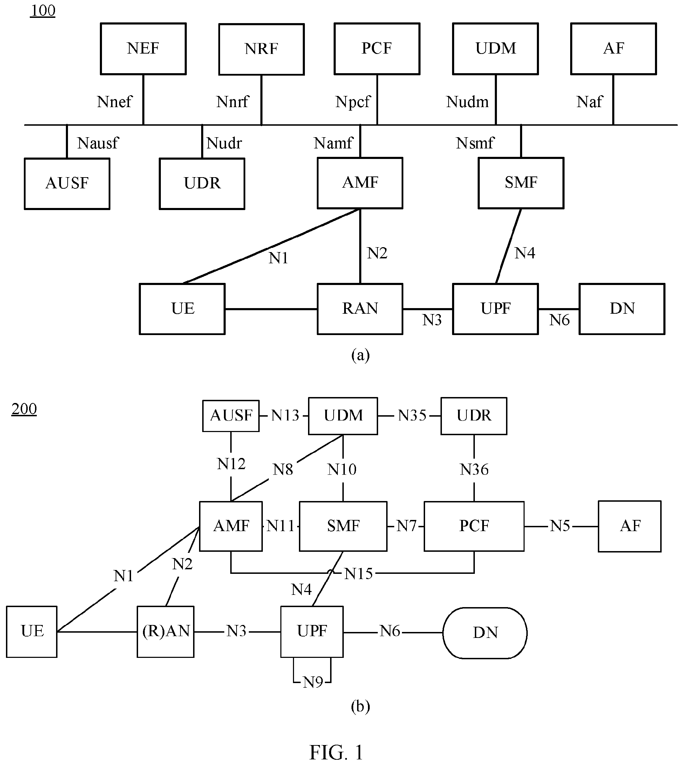

The following uses, with reference to FIG. 1, an example to describe a 5G system to which embodiments of this application are applicable. It should be understood that the 5G system described in this specification is merely an example, and should not constitute any limitation on this application.

It should be further understood that some network elements in the 5G system may communicate with each other through a service-based interface or a point-to-point interface. The following respectively describes a 5G system framework that is based on the service-based interface and a 5G system framework that is based on the point-to-point interface with reference to (a) in FIG. 1 and (b) in FIG. 1.

In example descriptions, (a) in FIG. 1 is a schematic diagram of an architecture of a 5G system 100 to which an embodiment of this application is applicable. FIG. 1 is a schematic diagram of a 5G network architecture based on a point-to-point interface. As shown in (a) in FIG. 1, the network architecture may include but is not limited to the following network elements (or referred to as functional network elements, functional entities, nodes, devices, or the like):
a (radio) access network ((radio) access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an AF network element, a data network (data network, DN), a network slice selection function (network slice selection function, NSSF), an authentication server function (authentication server function, AUSF), a unified data management (unified data management, UDM), a BSF network element, a unified data repository (unified data repository, UDR), and the like.

The following briefly describes the network elements shown in (a) in FIG. 1.
1. User equipment (user equipment, UE): The user equipment may be referred to as a terminal device (terminal device), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device or vehicle-mounted device with a wireless connection function. Currently, some examples of the terminal may be: a mobile phone (mobile phone), a tablet computer (tablet computer), a computer (for example, a notebook computer or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (internet of things, IoT) system. An IoT is an important part in future development of information technologies. A main technical feature of the IoT is to connect things to a network by using a communication technology, to implement an intelligent network for human-machine interconnection and thing-thing interconnection. An IoT technology can achieve massive connections, intensive coverage, and power saving for terminals by using, for example, a narrow band (narrow band, NB) technology.

In addition, the terminal device may alternatively include an intelligent printer, a train detector, and the like, and main functions include: collecting data (which is a function of some terminal devices), receiving control information and downlink data of a network device, sending an electromagnetic wave, and transmitting uplink data to the network device.

It should be understood that the user equipment may be any device that can access a network. The terminal device may communicate with the access network device by using an air interface technology.

Optionally, the user equipment may be configured to serve as a base station. For example, the user equipment may serve as a scheduling entity that provides a sidelink signal between user equipment devices in V2X, D2D, or the like. For example, a cellular phone communicates with a car through the sidelink signal. The cellular phone communicates with a smart home device without relaying a communication signal through a base station.

2. (Radio) access network ((radio) access network, (R)AN) device: The (radio) access network device is configured to provide a network access function for authorized user equipment in a specific area, and can use transmission tunnels of different quality of service based on levels, service requirements, and the like of the user equipment.

The (R)AN can manage radio resources and provide an access service for the user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a gNB or a transmission point (TRP or TP) in a 5G system, for example, an NR system, or one antenna panel or a group (including a plurality of antenna panels) of antenna panels of a base station in the 5G system, or may be a network node constituting the gNB or the transmission point, for example, a baseband unit (BBU) or a distributed unit (distributed unit, DU).

In some deployments, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from the information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified into an access network device in an access network (radio access network, RAN), or the CU may be classified into an access network device in a core network (core network, CN). This is not limited in this application.

In a satellite communication scenario, the radio access network device may also be referred to as a wireless satellite access network station (or a wireless satellite access network device or a wireless satellite access network), a satellite access network station (or a satellite access network device or a satellite access network), or a satellite network station (or referred to as a satellite network device or a satellite network). This is not limited in embodiments of this application. The satellite access network may be deployed in a plurality of manners. For example, a same PLMN has both a terrestrial 3GPP access network and a satellite 3GPP access network, and the two access networks respectively have independent interfaces with the core network. For another example, different core networks share a same satellite access network, and the shared satellite access network includes an available PLMN in broadcast system information. For another example, a terrestrial access network and the satellite access network are independent, to be specific, the terrestrial access network and the satellite access network correspond to independent PLMNs. For another example, a satellite in the sky is only responsible for signal transmission, and does not have a function of an access network. In this scenario, satellite access may also be referred to as satellite backhaul. In the foregoing non-satellite backhaul scenarios, the satellite may include all or some of functions of the access network. This is not limited in this application. When all functions of the base station are integrated into the satellite, the satellite access network device may be understood as a device with some functions of the base station on the satellite. Processing of related signaling and data of the access network is completely performed on the satellite. When some functions of the base station are integrated into the satellite, and some functions are located on the ground, the satellite access network device may be understood as a device with some functions of the base station on the satellite and some functions of the base station on the ground. Processing of related signaling and data of the access network is partially performed on the satellite and partially performed on the ground. During satellite backhaul, the satellite access network device may be understood as a base station on the ground. Processing of the related signaling and data of the access network is completely performed on the ground, and the satellite transparently transmits the signaling and data between the terminal device and the satellite access network.

3. User plane function (user plane function, UPF) network element: The user plane function network element is used for packet routing and forwarding, quality of service (quality of service, QoS) processing of user plane data, and the like.

In a 5G communication system, a user plane network element may be the user plane function (user plane function, UPF) network element. In a future communication system, the user plane network element may still be the UPF network element, or may have another name. This is not limited in this application.

4. Access and mobility management function (access and mobility management function, AMF) network element: The access and mobility management function network element is mainly used for mobility management, access management, and the like, and may be configured to implement a function other than session management in MME functions, for example, an access authorization/authentication function.

In the future communication system, an access and mobility management device may still be the AMF network element, or may have another name. This is not limited in this application.

5. Session management function (session management function, SMF) network element: The session management function network element is mainly used for session management, internet protocol (internet protocol, IP) address allocation and management of the user equipment, selection of a manageable user plane function, termination of a policy control and charging function interface, downlink data notification, and the like.

In the future communication system, a session management network element may still be the SMF network element, or may have another name. This is not limited in this application.

6. Policy control function (policy control function, PCF) network element: The policy control function network element is configured to: guide a unified policy framework of network behavior, provide policy rule information for a control plane function network element (for example, an AMF or an SMF), and the like.

In the future communication system, a policy control network element may still be the PCF network element, or may have another name. This is not limited in this application.

7. Application function (application function, AF): The application function is used for performing application influence on traffic routing, wirelessly accessing a network exposure function network element, interacting with a policy framework to perform policy control, and the like.

In the future communication system, an application network element may still be the AF network element, or may have another name. This is not limited in this application.

8. Unified data management (unified data management, UDM) network element: The unified data management network element is used for UE identifier processing, access authentication, registration, mobility management, and the like.

In the future communication system, unified data management may still be the UDM network element, or may have another name. This is not limited in this application.

9. Authentication server (authentication server function, AUSF) network element: The authentication server function network element is configured to: authenticate a service and generate a key to implement bidirectional authentication on the user equipment, and support a unified authentication framework.

In the future communication system, an authentication server function network element may still be the AUSF network element, or may have another name. This is not limited in this application.

10. Network data analytics function (network data analytics function, NWDAF) network element: The network data analytics function network element is configured to: identify a network slice instance and load load-level information of the network slice instance. The network data analytics function network element may enable an NF consumer to subscribe to or unsubscribe from a periodic notification and notify the consumer when a threshold is exceeded.

In the future communication system, a network data analytics function network element may still be the NWDAF network element, or may have another name. This is not limited in this application.

11. Data network (data network, DN): The DN is a network located outside an operator network. The operator network may access a plurality of DNs. A plurality of services may be deployed on the DN, and the DN may provide a service such as data and/or voice for the terminal device. For example, the DN is a private network of a smart factory, a sensor installed in a workshop of the smart factory may be the terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be the terminal device, and the mobile phone or the computer of the employee may access information, data resources, and the like in the internal office network of the company.

Nausf, Nnef, Npcf, Nudm, Naf, Namf, Nsmf, N1, N2, N3, N4, and N6 in (a) in FIG. 1 are interface sequence numbers. For meanings of the interface sequence numbers, refer to meanings defined in the 3GPP standard protocol. This is not limited herein.

In the network architecture shown in (a) in FIG. 1, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be used to send a non-access stratum (non-access stratum, NAS) message and the like. The RAN and the UPF may interact with each other through an N3 interface, and the N3 interface may be used to transmit user plane data and the like. The SMF and the UPF may interact with each other through an N4 interface, and the N4 interface may be used to transmit information such as identification information of a tunnel connected to N3, data buffering indication information, and a downlink data notification message. The UPF and the DN may interact with each other through an N6 interface, and the N6 interface may be used to transmit user plane data and the like. Relationships between other interfaces and network elements are shown in (a) in FIG. 1. For brevity, details are not described herein.

(b) in FIG. 1 is a schematic diagram of a 5G network architecture based on a point-to-point interface. For descriptions of functions of network elements in the figure, refer to the descriptions of functions of corresponding network elements in (a) in FIG. 1. Details are not described again. A main difference between (b) in FIG. 1 and (a) in FIG. 1 lies in that interfaces between the network elements in (b) in FIG. 1 are point-to-point interfaces rather than service-based interfaces.

In the architecture shown in (b) in FIG. 1, names and functions of the interfaces between the network elements are as follows.
(1) N7 is an interface between a PCF and an SMF, and is configured to deliver a protocol data unit (protocol data unit, PDU) session granularity control policy and a service data flow granularity control policy.
(2) N15 is an interface between the PCF and an AMF, and is configured to deliver a UE policy and an access control-related policy.
(3) N5 is an interface between an AF and the PCF, and is configured to deliver an application service request and report a network event.
(4) N4 is an interface between the SMF and a UPF, and is configured to transfer information between a control plane and a user plane, including delivery of a forwarding rule, a QoS control rule, a traffic statistics rule, and the like from the control plane to the user plane, and reporting of user plane information.
(5) N11 is an interface between the SMF and the AMF, and is configured to transfer PDU session tunnel information between a RAN and the UPF, transfer a control message to be sent to UE, transfer radio resource control information to be sent to the RAN, and the like.
(6) N2 is an interface between the AMF and the RAN, and is configured to transfer radio bearer control information from a core network side to the RAN, and the like.
(7) N1 is an interface between the AMF and UE, is irrelevant to access, and is configured to transfer the QoS control rule to the UE, and the like.
(8) N8 is an interface between the AMF and a UDM, is used by the AMF to obtain, from the UDM, subscription data and authentication data that are related to access and mobility management, is used by the AMF to register related information of current mobility management of the UE with the UDM, and the like.
(9) N10 is an interface between the SMF and the UDM, is used by the SMF to obtain, from the UDM, subscription data related to session management, is used by the SMF to register related information of a current session of the UE with the UDM, and the like.
(10) N35 is an interface between the UDM and a UDR, and is used by the UDM to obtain user subscription data information from the UDR.
(11) N36 is an interface between the PCF and the UDR, and is used by the PCF to obtain policy-related subscription data and related information of application data from the UDR.
(12) N12 is an interface between the AMF and an AUSF, and is used by the AMF to initiate an authentication procedure to the AUSF, where an SUCI may be carried as a subscription identifier.
(13) N13 is an interface between the UDM and the AUSF, and is used by the AUSF to obtain a user authentication vector from the UDM, to perform the authentication procedure.

It should be understood that the foregoing names are defined merely for distinguishing between different functions, and should not constitute any limitation on this application. This application does not exclude a possibility of using other names in the 5G network and another future network. For example, in a 6G network, some or all of the foregoing network elements may still use terms in 5G, or may use other names. The names of the interfaces between the network elements in (a) in FIG. 1 are merely examples, and the interfaces may have other names during specific implementation. This is not specifically limited in this application. In addition, names of messages (or signaling) transmitted between the foregoing network elements are merely examples, and do not constitute any limitation on functions of the messages.

It may be understood that the network elements or the functions may be network elements in a hardware device, may be software functions running on dedicated hardware, or may be virtualized functions instantiated on a platform (for example, a cloud platform). For ease of description, in this application, an example in which the network device is the access and mobility management network element AMF and the base station is the radio access network RAN is used for description subsequently.

It should be understood that the foregoing network architecture used in embodiments of this application is merely an example for description, and a network architecture applicable to embodiments of this application is not limited thereto. Any network architecture that can implement the functions of the foregoing network elements is applicable to embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as the network architecture evolves and a new service scenario emerges.

Aspects or features in embodiments of this application may be implemented as methods, or implemented by using an apparatus or a product of standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel and various other media that can store, include, and/or carry instructions and/or data.

To facilitate understanding of the technical solutions in embodiments of this application, before the solutions in embodiments of this application are described based on the 5G architecture, some terms or concepts in 5G that may be used in embodiments of this application, and network elements that may be used in this application but are not shown in the foregoing network architecture are first briefly described.

### 1. Satellite communication

A satellite communication technology is a technology in which a wireless communication device on the ground accesses a network by using a satellite, or is a technology in which wireless communication devices on the ground communicate with each other by using a satellite as a relay. In comparison with a traditional mobile communication system, the satellite communication has a wider coverage range and can overcome natural geographical obstacles such as an ocean, a desert, and a mountain.

Based on the communication system architecture shown in FIG. 1, the satellite communication and a 5G communication system (5G communication system, 5GS) may be integrated. Currently, there may be two scenarios for integration of the satellite communication and the 5GS. In a first scenario, a satellite serves as 3GPP access, and UE accesses the 5GS by using the satellite. In a second scenario, a satellite link serves as a backhaul link, and a RAN communicates with a 5G core (5G core, 5GC) network through the backhaul link (where for example, the backhaul link provides a bearer for N3 or N9).

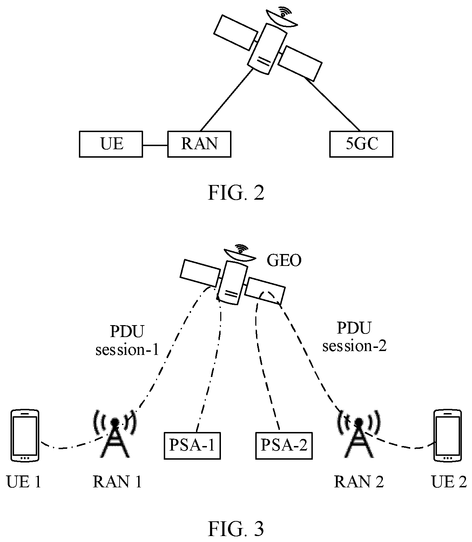

This application is mainly for a scenario in which a satellite link shown in FIG. 2 serves as a 5G backhaul link. FIG. 2 is a schematic diagram of a scenario in which satellite communication and a 5GS are integrated. It can be learned from FIG. 2 that the satellite link serves as the 5G backhaul link, and a RAN is connected to a 5GC through the 5G backhaul link. The 5GC may include core network elements such as the AMF, the AF, and the UPF shown in FIG. 1.

It should be noted that FIG. 2 shows only one satellite. In an actual communication scenario, there may be a plurality of satellites, and types of the plurality of satellites may be the same or may be different. There is a radio link between different satellites, so that signaling interaction and user data transmission between access network devices can be completed.

Due to different orbit heights, different types of satellites may have different coverage areas, motion characteristics, propagation delays and jitter that are caused, and the like. For example, based on orbit types, satellites may be classified into a geostationary equatorial orbit (geostationary equatorial orbit, GEO) satellite, a low earth orbit (low earth orbit, LEO) satellite polar orbit constellation, a medium earth orbit (medium earth orbit, MEO) satellite, and another satellite (another SAT).

### 2. Satellite constellation

The satellite constellation is a set of satellites that are transmitted into an orbit and that can work normally. Usually, the satellite constellation is a satellite network formed by some satellites configured in a specific manner. Satellite constellations mainly include the global positioning system (global positioning system, GPS) satellite constellation, the GLONASS (GLONASS) satellite constellation, the Galileo (Galileo) satellite constellation, the BeiDou satellite constellation, and the like.

Constellation types mainly used in this application include:
a low earth orbit (low earth orbit, LEO) satellite polar orbit constellation, a medium earth orbit (medium earth orbit, MEO) satellite polar orbit constellation, an LEO inclined orbit constellation, an MEO inclined orbit constellation, and the like.

The LEO inclined orbit constellation and the MEO inclined orbit constellation do not relate to a concept of a reverse seam. In other words, when constellation types are the LEO inclined orbit constellation and the MEO inclined orbit constellation, whether the reverse seam is supported does not need to be considered. The LEO polar orbit constellation and the MEO polar orbit constellation relate to a concept of a reverse seam. In other words, when constellation types are the LEO polar orbit constellation and the MEO polar orbit constellation, whether the reverse seam is supported needs to be considered.

### 3. Ephemeris

The ephemeris (Ephemeris) may also be referred to as an ephemeris table, a calendar table, a calendar, or the like, and is information used to locate a celestial body at any moment. A terminal device may search for a network based on satellite ephemeris data, to improve user experience. The satellite ephemeris mainly includes an orbital plane parameter (Orbital plane parameter) and a satellite level parameter (Satellite level parameter).

It should be understood that in embodiments of this application, the satellite ephemeris may also be referred to as an ephemeris parameter, a satellite ephemeris parameter, a satellite ephemeris parameter in a satellite access network, a satellite ephemeris parameter in satellite backhaul, or another possible name. This is not limited in this application.

### 4. Satellite backhaul

When a satellite is used as a transmission path between the RAN and the UPF in the network architecture shown in FIG. 1, the transmission path is referred to as satellite backhaul. FIG. 3 is a schematic diagram of a satellite backhaul scenario. As shown in FIG. 3, UE 1 establishes a PDU session-1 through satellite backhaul, and a user plane path is the UE, a RAN 1, a GEO UPF-1, and (optional) a ground PSA-1 (as shown by dash-dotted lines in the figure). UE 2 establishes a PDU session-2 through satellite backhaul, and a user plane path is the UE, a RAN 2, a GEO UPF-2, and (optional) a ground PSA-2 (as shown by dashed lines in the figure). The GEO UPF-1 and the GEO UPF-2 may be the same or may be different.

The foregoing describes, with reference to FIG. 1, the scenario to which embodiments of this application can be applied, and further briefly describes the basic concepts used in this application. The following describes, with reference to the accompanying drawings, in detail communication methods and apparatuses provided in this application.

A specific structure of an execution body of methods provided in embodiments of this application is not specifically limited in the following embodiments, provided that a program that records code of the methods provided in embodiments of this application can be run to perform communication according to the methods provided in embodiments of this application. For example, the methods provided in embodiments of this application may be performed by a core network device or a terminal device, or may be performed by a functional module that can invoke a program and execute the program in the core network device or the terminal device.

For ease of understanding of embodiments of this application, the following descriptions are provided.

First, in this application, "indicate" may be understood as "enable", and "enable" may include "direct enable" and "indirect enable". When it is described that a piece of information is used to enable A, the information may directly enable A or indirectly enable A, but it does not indicate that the information definitely carries A.

Information to be enabled by the information is referred to as to-be-enabled information. In a specific implementation process, there are many manners of enabling the to-be-enabled information. For example, but not limited to, the to-be-enabled information, for example, the to-be-enabled information itself or an index of the to-be-enabled information, may be directly enabled. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information is known or agreed on in advance. For example, specific information may alternatively be enabled by using an arrangement order of pieces of information that is pre-agreed on (for example, stipulated in a protocol), to reduce enabling overheads to some extent. In addition, a common part of pieces of information can be further identified and enabled in a unified manner, to reduce enabling overheads caused by enabling a same piece of information separately.

Second, "first", "second", and various numerical numbers (for example, "#1", and "#2") shown in this application are merely for ease of description, and are used to distinguish between objects, but are not intended to limit the scope of embodiments of this application, for example, are used to distinguish between different messages, but are not used to describe a particular order or sequence. It should be understood that the objects described in this way are interchangeable in an appropriate circumstance, so that a solution other than embodiments of this application can be described.

Third, the terms "include" and "have" and any other variants are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

Fourth, in this application, "pre-configuration" may include predefinition, for example, definition in a protocol. "Predefinition" may be implemented by pre-storing corresponding code or a corresponding table in a device (where for example, the device includes network elements), or may be implemented in another manner that may indicate related information. A specific implementation of "predefinition" is not limited in this application.

Fifth, "storage" in embodiments of this application may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Sixth, "protocols" used in embodiments of this application may be standard protocols in the communication field, for example, may include a 5G protocol, a new radio (new radio, NR) protocol, and a related protocol applied to a future communication system. This is not limited in this application.

Seventh, in method flowcharts in the accompanying drawings of the specification of this application, dashed line boxes indicate optional steps.

The following describes in detail the communication methods provided in embodiments of this application by using interaction between network elements as an example. It should be understood that, for the terms and steps in embodiments of this application, refer to each other.

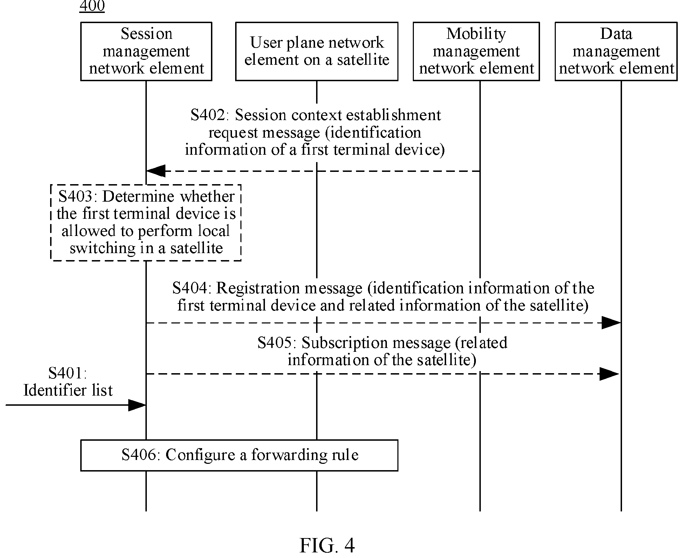

FIG. 4 is an example flowchart of a method 400 according to an embodiment of this application. The following provides example descriptions for the method 400 in combination with steps.

S401: A session management network element obtains an identifier list.

For example, the identifier list includes identification information of one or more terminal devices that access a satellite in a satellite backhaul manner. In other words, the identifier list includes identification information of one or more terminal devices that access a network in the satellite backhaul manner. The identifier list corresponds to related information of the satellite. The identification information of the terminal device may be an internet protocol (internet protocol, IP) address of the terminal device, in other words, the identifier list may be an IP list of the terminal device. Alternatively, the identification information of the terminal device may be an identifier of another type, for example, a subscription permanent identifier (subscription permanent identifier, SUPI) of the terminal device. This is not limited in this application. In an implementation, the one or more terminal devices support local switching in the satellite. In this case, the identifier list may be further described as follows: The identifier list includes identification information of one or more terminal devices that support local switching in the satellite and that access the satellite in the satellite backhaul manner.

The related information of the satellite may be any information associated with the satellite. For example, the related information of the satellite may be any one of the following information: a data network access identifier corresponding to the satellite, an identifier of the satellite, and an internet protocol address of the satellite. This is not limited in this application.

The following provides example descriptions for specific implementations in which the session management network element obtains the identifier list.

In a possible implementation, the session management network element sends a request message to a data management network element, where the request message includes the related information of the satellite, and the request message requests to obtain the identifier list. Correspondingly, the data management network element receives the request message from the session management network element, and then obtains, based on the related information of the satellite, the locally stored identifier list corresponding to the related information of the satellite. Then, the data management network element sends the identifier list to the session management network element.

In another possible implementation, a mobility management network element may alternatively request to obtain the identifier list from the data management network element, and then send the obtained identifier list to the session management network element.

In still another possible implementation, if all terminal devices corresponding to the identifier list are served by the session management network element, the session management network element may determine the identifier list. In other words, the session management network element may determine the identifier list of the terminal device that accesses the satellite through satellite backhaul.

In still another possible implementation, the session management network element determines the identifier list based on an identifier list (denoted as a first identifier list) of a terminal device that needs to perform communication and an identifier list (denoted as a second identifier list) of the terminal device that accesses the satellite through satellite backhaul. For example, before S401, the session management network element receives the first identifier list from an application function network element, where the first identifier list includes identification information corresponding to the terminal device that needs to perform communication. The terminal device that needs to perform communication is, for example, a terminal device that needs to participate in an online conference.

Then, the session management network element may obtain, from a mobility management network element or a data management network element, the second identifier list of the terminal device that accesses the satellite in the satellite backhaul manner, or the session management network element may determine the second identifier list of the terminal device that accesses the satellite in the satellite backhaul manner. For a specific implementation, refer to the foregoing example (in other words, the identifier list in the foregoing example corresponds to the second identifier list herein).

Further, the session management network element determines the identifier list based on the first identifier list and the second identifier list. For example, the identifier list includes identification information of a terminal device in both the first identifier list and the second identifier list, to be specific, the identifier list includes identification information of one or more terminal devices that need to perform communication and that access the satellite through satellite backhaul.

For example, the session management network element SMF receives the first identifier list {UE 1 to UE 10} from the application function network element AF, and the SMF obtains that the second identifier list of the terminal device that accesses the satellite in the satellite backhaul manner is {UE 5 to UE 100}. In this case, the SMF determines, based on the first identifier list and the second identifier list, that the identifier list is {UE 5 to UE 10}. In other words, communication of the UE 5 to the UE 10 may be implemented through local switching in the satellite in this application, and communication of the UE 1 to the UE 4 may be implemented by using a conventional technology. Details are not described in this application.

It should be understood that the data management network element pre-stores a correspondence between the related information of the satellite and the identifier list. The terminal device in the identifier list may be registered (or stored) by the session management network element with (or in) the data management network element. The following provides example descriptions in combination with S403 to S405.

S402: The session management network element receives a session context establishment request message from the mobility management network element.

For example, the session context establishment request message includes identification information of a first terminal device, where the first terminal device accesses the satellite in the satellite backhaul manner. The identification information of the terminal device may be an IP of the terminal device, or may be an SUPI of the terminal device. This is not limited in this application. In an implementation, the first terminal device accesses the satellite in a geostationary orbit satellite backhaul manner. In other words, a satellite backhaul manner of the first terminal device is geostationary orbit satellite backhaul. In this implementation, the identifier list may be further described as follows: The identifier list includes identification information of one or more terminal devices that access a geostationary orbit satellite in the geostationary orbit satellite backhaul manner.

S403: The session management network element determines whether the first terminal device is allowed to perform local switching in the satellite.

For example, the session management network element may determine, based on subscription information or policy information of the first terminal device, whether the first terminal device is allowed to perform local switching in the satellite. For example, the subscription information or the policy information indicates that the terminal can perform local switching. This is not limited in this application. If the session management network element determines that the first terminal device is allowed to perform local switching in the satellite, the session management network element performs S404.

S404: The session management network element sends a registration message to the data management network element. Correspondingly, the data management network element receives the registration message from the session management network element.

For example, the registration message includes the identification information of the first terminal device and the related information of the satellite. Correspondingly, after receiving the registration message, the data management network element stores the identification information of the first terminal device and the related information of the satellite; or the data management network element stores the identification information of the first terminal device in the identifier list corresponding to the related information of the satellite.

Optionally, before S404, the session management network element obtains the related information of the satellite.

For example, the session management network element may obtain the related information of the satellite from the mobility management network element, or may determine the related information of the satellite.

In an example, the mobility management network element may include the related information of the satellite in the session context establishment request message, and the session management network element obtains the related information of the satellite from the session context establishment request message.

In another example, the session management network element determines the related information of the satellite based on location information of the terminal device. Optionally, the session management network element may further determine the related information of the satellite in combination with other information. For example, the session management network element determines the related information of the satellite based on the location information of the terminal device and satellite backhaul type information. For another example, the session management network element may determine the related information of the satellite based on the location information of the terminal device, satellite backhaul type information, and constellation information of the satellite.

Similarly, if another terminal device (for example, a second terminal device) that can perform local switching in the satellite and that accesses the satellite through satellite backhaul establishes a session via the session management network element, the session management network element registers identification information of the second terminal device and the related information of the satellite with the data management network element. The data management network element receives and stores a correspondence between location information of the second terminal device and the related information of the satellite; or the data management network element stores the location information of the second terminal device in the identifier list corresponding to the related information of the satellite. In this manner, an identifier list including an identifier of one or more terminal devices that access the satellite in the satellite backhaul manner and that support local switching in the satellite may be maintained on a side of the data management network element.

Optionally, in S405, the session management network element sends a subscription message to the data management network element, where the subscription message includes the related information of the satellite, and the subscription message is used to subscribe to a change notification of the identifier list. In other words, when the identifier list corresponding to the related information of the satellite is updated, the data management network element sends a notification message to the session management network element. For example, when a terminal device is registered with the satellite (to be specific, a terminal device accesses a network through satellite backhaul), or a terminal device is deregistered from the satellite (to be specific, a terminal device no longer accesses the network through satellite backhaul), the data management network element sends the notification message to the session management network element, and includes an updated identifier list in the notification message.

It should be understood that S405 is described by using explicit subscription as an example. However, the session management network element may alternatively subscribe to the data management network element in an implicit subscription manner, in other words, step 405 is not performed. This is not limited in this application. It should be understood that the identifier list may alternatively be registered by the session management network element with the data management network element. A specific implementation is similar to that of S402 to S405, and is briefly described below.

For example, the mobility management network element receives, from the first terminal device, a message that includes a session establishment request message, where the message further includes the identification information of the first terminal device. The first terminal device accesses the satellite in the satellite backhaul manner. Then, optionally, the mobility management network element determines whether the first terminal device is allowed to perform local switching in the satellite (where this is similar to S403). If the first terminal device is allowed to perform local switching in the satellite, the mobility management network element sends a registration message to the data management network element, where the registration message includes the identification information of the first terminal device and the related information of the satellite (where this is similar to S404). The data management network element receives and stores a correspondence between the identification information of the first terminal device and the related information of the satellite. Optionally, the mobility management network element may further send a subscription message to the data management network element to subscribe to a change notification of the identifier list (where this is similar to S405). Details are not described herein again.

S406: The session management network element configures a forwarding rule for a user plane network element on the satellite.

For example, the forwarding rule is used to offload (or forward), to an access network device corresponding to the terminal device, a data packet whose destination address is included in an address of the terminal device corresponding to the identifier list. Alternatively, it may be further described as that, the forwarding rule is used to offload, to an access network device corresponding to the terminal device, a data packet to be sent to the terminal device corresponding to the identifier list. Alternatively, it may be further described as that, the forwarding rule is used to offload, to an access network device corresponding to the terminal device, a data packet whose destination address points to the terminal device in the identifier list. Alternatively, it may be further described as that, the forwarding rule is used to offload, to an internal interface, a data packet whose destination address is included in an address of the terminal device in the identifier list. For example, the UE 1 accesses the network through satellite backhaul. It is assumed that, in this case, the identifier list corresponding to the related information of the satellite includes the UE 2 and the UE 3. The UE 1 sends a data packet to the UE 2, where a destination address of the data packet is a UE 2 IP. When receiving the data packet, the user plane network element on the satellite determines, according to the forwarding rule, that the destination address of the data packet is included in an address of a terminal device corresponding to the UE 2 or the UE 3, and the user plane network element on the satellite sends the data packet to an access network device corresponding to the UE 2.

Further, the forwarding rule is further used to offload, to the access network device corresponding to the terminal device, a data packet sent to the terminal device. The foregoing example is used for description. The UE 3 sends a data packet to the UE 1, where a destination address of the data packet is a UE 1 IP. When receiving the data packet, the user plane network element on the satellite determines, according to the forwarding rule, that the destination address of the data packet is the UE 1, and the user plane network element on the satellite sends the data packet to an access network device corresponding to the UE 1.

It should be noted that a specific representation form of the forwarding rule may include two parts: a detection rule part and a forwarding rule part. The detection rule part is used to detect a data packet that meets a condition, to be specific, detect the data packet whose destination address is in the address of the terminal device in the identifier list. The forwarding rule part is used to forward, to the internal interface or the access network device corresponding to the terminal device corresponding to the destination address, the data packet that meets the condition.

Based on the foregoing solution, the session management network element may configure the forwarding rule for the user plane network element on the satellite, so that the user plane network element sends, to the access network device corresponding to the terminal device, the data packet whose destination address is included in the address of the terminal device corresponding to the identifier list. In other words, for the terminal device in the identifier list, the data packet sent to the terminal device may be directly sent by the user plane network element on the satellite to the corresponding access network device without using a terrestrial anchor access network device. Therefore, a data transmission path can be shortened, and a transmission delay can be reduced.

The following describes, based on a 5G system, communication methods provided in embodiments of this application. It should be understood that an SMF 1 in a method 500 and a method 600 may correspond to the session management network element in the method 400, an AMF 1 in the method 500 and the method 600 may correspond to the mobility management network element in the method 400, a UDM/an NRF in the method 500 and the method 600 may correspond to the data management network element in the method 400, and a UE ID list in the method 500 and the method 600 may correspond to the identifier list in the method 400. Therefore, descriptions of different embodiments may be mutually referenced and supplemented.

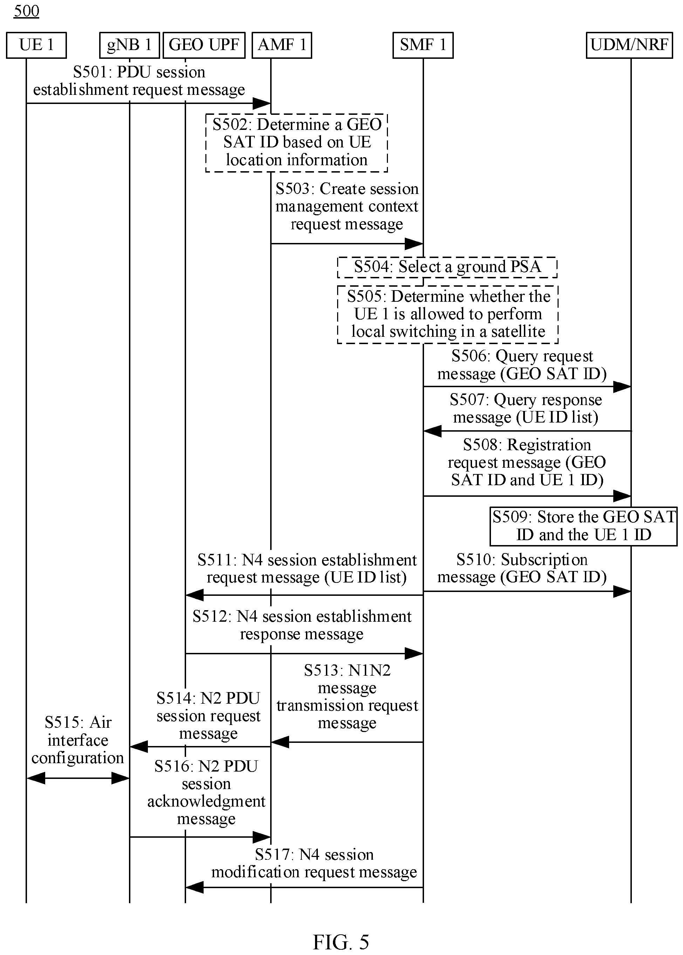

FIG. 5 is an example flowchart of a method 500 according to an embodiment of this application. The following provides example descriptions for the method 500 in combination with steps.

S501: UE 1 sends a PDU session establishment request message to an AMF 1. Correspondingly, the AMF 1 receives the PDU session establishment request message from the UE 1.

For example, the UE 1 sends the PDU session establishment (PDU session establishment) request message to the AMF 1 by using a NAS message. Specifically, for example, the UE 1 sends an AN message (AN message) to a gNB 1, where the AN message carries the NAS message (NAS message), and the NAS message includes a PDU session ID and a PDU session establishment request. After receiving the AN message from the UE 1, the gNB sends an N2 message (N2 message) to the AMF 1, where the N2 message includes the PDU session ID, UE location information (UE location information, ULI), the PDU session establishment request, and the like. The UE location information identifies a current location of the UE 1. For example, the UE location information may be a tracking area identity (tracking area identity, TAI), a cell identity, a geographic location identity, or the like.

Optionally, in S502, the AMF 1 determines a GEO SAT ID based on the UE location information.

For example, when the AMF 1 determines that the UE 1 accesses a network through GEO satellite backhaul, the AMF 1 determines the GEO SAT ID based on the UE location information. The GEO SAT ID identifies a GEO satellite accessed by the UE 1. The GEO SAT ID may be identification information of the GEO satellite, or may be identification information (namely, a GEO UPF ID) of a UPF on the GEO satellite. This is not limited in this application. It may be understood that, as described in the method 400, the GEO SAT ID may alternatively be represented by a DNAI, to be specific, represented by a DNAI corresponding to the GEO satellite. A specific meaning of the DNAI may also be described as an identifier corresponding to the user plane function network element on the GEO satellite, or an identifier corresponding to a user plane connection of the GEO UPF. Alternatively, the GEO SAT ID may be represented by a GEO SAT IP, and the GEO SAT IP may be understood as an IP address of the GEO SAT.

In an implementation, the AMF 1 may further determine a satellite backhaul type of the UE 1. For example, if the AMF 1 determines, based on a gNB 1 ID, that the UE 1 accesses the network by using the GEO satellite, the AMF 1 determines that the satellite backhaul type of the UE 1 is GEO SATB. In another implementation, the AMF 1 may obtain, from the gNB 1, the satellite backhaul type corresponding to the UE. For example, the gNB 1 sends satellite backhaul type information to the AMF 1, where the satellite backhaul type information indicates the UE 1 to access the network through GEO satellite backhaul.

Optionally, the AMF 1 may further determine constellation information of the satellite. For example, in an implementation, when accessing different constellations, a gNB uses different gNB IDs/gNB IPs. In this case, the AMF 1 may determine constellation information of the UE 1 based on the gNB 1 ID or a gNB 1 IP. In another implementation, when different constellations use different frequency bands, the AMF 1 may determine constellation information of the UE 1 based on a frequency used by the satellite.

S503: The AMF 1 sends a create session management context request message to an SMF 1. Correspondingly, the SMF 1 receives the create session management context request message from the AMF 1.

For example, after receiving the PDU session establishment request from the UE 1, the AMF 1 sends the create session management context request (Nsmf_PDUSession_CreateSMContext request) message to the SMF 1, where the create session management context request message includes parameters such as an SUPI, the PDU session ID, and the UE location information.

It should be understood that if the AMF performs S502, the AMF 1 may include the GEO SAT ID in the create session management context request message.

Optionally, in S504, the SMF 1 selects a ground PSA.

For example, the SMF 1 may select the ground PSA for a session of the UE 1. Optionally, the SMF 1 may further allocate an IP address (denoted as a UE 1 IP) to the UE 1.

It should be understood that the SMF 1 may alternatively not select the ground PSA, in other words, the SMF 1 may not perform S504. In this case, the SMF 1 may still allocate the UE 1 IP to the UE 1, but in this case, the UE 1 IP is not anchored to the UPF.

Optionally, in S505, the SMF 1 determines whether the UE is allowed to perform local switching in the satellite.

In an implementation, the SMF 1 obtains subscription data of the UE 1 by using a UDM, and determines, based on the subscription data, whether the UE 1 is allowed to perform local switching (local switching) in the satellite.

In another implementation, the SMF 1 obtains policy information for the UE by using a PCF, and determines, based on the policy information, whether the UE is allowed to perform local switching in the satellite.

S506: The SMF 1 sends a query request message to the UDM/an NRF. Correspondingly, the UDM/NRF receives the query request message from the SMF 1.

For example, when the SMF 1 determines that the UE 1 is allowed to perform local switching in the satellite, the SMF 1 sends the query request message to the UDM/NRF, where the query request message includes the GEO SAT ID. The query request message requests to query a UE identifier list corresponding to the GEO SAT ID. Alternatively, the query request message requests to query a UE identifier list of UE connected to the GEO satellite corresponding to the GEO SAT ID. Alternatively, the query request message requests to query an identifier list of UE that is connected to the GEO satellite corresponding to the GEO SAT ID and that can perform local switching in the satellite. Alternatively, the query request message requests to query an identifier list that is of UE corresponding to the GEO SAT ID and that is stored in the UDM/NRF. The UE ID list includes an identifier of one or more UEs that are connected to the GEO satellite and that can perform local switching in the satellite. The identifier of the UE herein may be an ID of the UE, an IP of the UE, or an identifier of another type. This is not limited in this application. In other words, the identifier list of the UE may be a UE ID list, a UE IP list, or a list of another type. This is not limited in this application. For ease of description, an example in which the identifier list of the UE is the UE ID list is used for description subsequently.

It should be understood that the SMF 1 may receive the GEO SAT ID from the AMF 1, or may determine the GEO SAT ID. For example, the SMF 1 determines the GEO SAT ID based on location information of the UE 1. This is not limited in this application.

S507: The UDM/NRF sends a query response message to the SMF 1. Correspondingly, the SMF 1 receives the query response message from the UDM/NRF.

For example, after receiving the query request message from the SMF 1, the UDM/NRF determines, based on the GEO SAT ID, the UE ID list corresponding to the GEO SAT ID. Then, the UDM/NRF sends the query response message to the SMF 1, where the query response message includes the UE ID list. It should be understood that the UDM/NRF pre-stores a correspondence between the GEO SAT ID and the UE ID list.

It should be noted that the foregoing query process, namely, S506 and S507, may be further enhanced as follows.

Optionally, after receiving the query request message from the SMF 1, the UDM/NRF determines whether the query request message is the first query request. To be specific, the UDM/NRF determines whether another SMF queries, from the UDM/NRF before S506, the UE ID list corresponding to the GEO SAT ID.

When the UDM/NRF determines that the query request is not the first query request, the query response message returned by the UDM/NRF to the SMF (that is, S507) does not include the UE ID list corresponding to the GEO SAT ID. Further, the query response message includes one piece of indication information, indicating, to the SMF 1, that the query request is not the first query request. In this case, the UDM/NRF does not return, to the SMF 1, the UE ID list corresponding to the GEO SAT ID.

S508: The SMF 1 sends a registration request message to the UDM/NRF. Correspondingly, the UDM/NRF receives the registration request message from the SMF 1.

For example, when the SMF 1 determines that the UE is allowed to perform local switching in the satellite, the SMF 1 sends the registration request message to the UDM/NRF, where the registration request message includes the GEO SAT ID and a UE 1 ID. In other words, if UE can perform local switching in the satellite, the SMF 1 sends, to the UDM/NRF, an identifier of the UE and an identifier of a satellite corresponding to the UE.

It should be understood that the registration request message may further have another name. For example, the registration request message may also be referred to as a storage request message. This is not limited in this application.

It should be further understood that S508 may be performed before S506, or may be performed after S506. This is not limited in this application.

It should be further understood that S508 and S506 may alternatively be performed simultaneously. For example, S508 and S506 may be combined into one message. For example, the SMF 1 sends a registration and query request message to the UDM/NRF, where the registration and query request message includes the GEO SAT ID and the UE 1 ID. After receiving the registration and query request message, the UDM/NRF sends a registration and query response message to the SMF 1, where the registration and query response message includes the UE ID list.

S509: The UDM/NRF stores the GEO SAT ID and the UE 1 ID.

For example, after receiving the registration request message from the SMF 1, the UDM/NRF stores the GEO SAT ID and the UE 1 ID, stores a correspondence between the GEO SAT ID and the UE 1 ID, or stores the UE 1 ID in the UE ID list corresponding to the GEO SAT ID.

S510: The SMF 1 sends a subscription message to the UDM/NRF. Correspondingly, the UDM/NRF receives the subscription message from the SMF 1.

For example, the SMF 1 may further send the subscription message to the UDM/NRF, where the subscription message includes the GEO SAT ID, and the subscription message is used to subscribe to a change notification of the UE ID list corresponding to the GEO SAT ID. In other words, when the UE ID list corresponding to the GEO SAT ID is updated, the UDM/NRF sends a notification message to the SMF 1. For example, when UE is register with the GEO SAT, or UE is deregistered from the GEO SAT, the UDM/NRF sends the notification message to the SMF 1, and include an updated UE ID list in the notification message.

It should be understood that S510 is described by using explicit subscription as an example. However, the SMF 1 may alternatively subscribe to the UDM/NRF in an implicit subscription manner. For example, S510 is not performed, and implicit subscription is indicated by using S506 or S508. This is not limited in this application.

S511: The SMF 1 sends an N4 session establishment request message to the GEO UPF. Correspondingly, the GEO UPF receives the N4 session establishment request message from the SMF.

For example, when the UE is allowed to perform local switching in the satellite, the SMF selects the GEO UPF, or the SMF inserts the GEO UPF as an I-UPF/offloading point. The GEO UPF corresponds to the GEO SAT ID.

Further, the SMF 1 sends the N4 session establishment request message to the GEO UPF, where the N4 session establishment request message may include the UE ID list corresponding to the GEO SAT ID, to indicate the GEO UPF to perform local switching on a packet that matches the UE ID list, or indicate the GEO UPF to perform local switching on a packet whose destination address points to the UE in the UE ID list.

S512: The GEO UPF sends an N4 session establishment response message to the SMF 1. Correspondingly, the SMF 1 receives the N4 session establishment response message from the GEO UPF.

For example, after receiving the N4 session establishment request message from the SMF 1, the GEO UPF returns the N4 session establishment response message, where the N4 session establishment response message carries GEO UPF tunnel info for N3 (namely, N3 tunnel information of the GEO UPF), to establish an N3 connection between the gNB 1 and the GEO UPF. Optionally, the N4 session establishment response message may further carry GEO UPF tunnel info for N9 (namely, N9 tunnel information of the GEO UPF), to establish an N9 tunnel between the GEO UPF and the ground PSA.

S513: The SMF 1 sends an N1N2 message transmission request message to the AMF 1. Correspondingly, the AMF 1 receives the N1N2 message transmission request message from the SMF 1.

For example, the N1N2 message transmission (N1N2messageTransfer) request message includes the PDU session ID, N2 SM info sent to the gNB, and an N1 SM container sent to the UE.

S514: The AMF 1 sends an N2 PDU session request message to the gNB 1. Correspondingly, the gNB 1 receives the N2 PDU session request message from the AMF 1.

For example, the N2 PDU session request (N2 PDU session request) message includes the N2 SM info and the N1 SM container.

S515: The gNB 1 initiates air interface configuration to the UE.

S516: The gNB 1 sends an N2 PDU session acknowledgment message to the AMF 1. Correspondingly, the AMF 1 receives the N2 PDU session acknowledgment message from the gNB 1.

For example, the N2 PDU session acknowledgment (N2 PDU session ACK) message includes gNB tunnel info (namely, gNB tunnel information). Further, the AMF sends the gNB tunnel info to the SMF.

S517: The SMF 1 sends an N4 session modification request message to the GEO UPF. Correspondingly, the GEO UPF receives the N4 session modification request message from the SMF.

For example, after receiving the gNB tunnel info, the SMF 1 sends the N4 session modification request message to the GEO UPF, where the N4 session modification request message includes configuration information. The configuration information indicates the GEO UPF to send, to a gNB corresponding to UE corresponding to the UE ID list, a received packet that needs to be sent to the UE; or the configuration information indicates the GEO UPF to send, to a gNB corresponding to UE in the UE ID list, a packet whose destination address points to the UE.

It should be understood that the GEO UPF may determine, based on a stored context, the gNB corresponding to the UE. For example, the GEO UPF stores information shown in Table 1. An N4 session ID corresponds to the PDU session ID.

**Table 1**

| UE IP | gNB tunnel info | GEO UPF tunnel info | N4 session ID |
|---|---|---|---|
| UE 1 IP | gNB-1 tunnel info | GEO UPF tunnel info-1 | N4 session-1 |
| UE 2 IP | gNB-2 tunnel info | GEO UPF tunnel info-2 | N4 session-2 |

It is assumed that the UE ID list includes the identifier of the UE 1 and an identifier of UE 2. The UE 1 sends a packet to the GEO UPF by using the gNB 1, where a destination address is the UE 2 IP. The GEO UPF determines, based on the stored context, that tunnel information of a gNB 2 corresponding to the UE 2 is the gNB-2 tunnel info. Then, the GEO UPF sends the packet to the gNB 2 based on the gNB-2 tunnel info.

Based on the foregoing solution, a data forwarding rule for the UE in the UE ID list may be configured for the GEO UPF, so that a data packet whose destination address points to any UE in the UE ID list can be directly sent to the corresponding gNB. Therefore, the UE in the UE ID list performs local switching in the satellite, so that a delay can be reduced and user experience can be improved.

In another aspect, when new UE accesses the GEO UPF, the UE ID list may be further updated. The following provides descriptions in combination with examples.

After the foregoing procedure, the UE 2 also initiates a PDU session establishment procedure. A specific procedure is similar to the session establishment procedure of the UE 1. For a part that is not described in detail, refer to the descriptions of S501 to S517. It should be noted that network elements that serve the UE 2 are the gNB 2, an AMF 2, and an SMF 2.

The UE 2 sends a PDU session establishment request message to the AMF 2. Then, after receiving the PDU session establishment request message, the AMF 2 sends a create session management context request message to the SMF 2. If the SMF 2 determines that the UE 2 accesses a network through GEO SAT backhaul, the SMF 2 requests, from the UDM/NRF based on the GEO SAT ID, to obtain a UE ID list corresponding to the GEO SAT ID (where this is similar to S506). The UDM/NRF returns the UE ID list to the SMF 2 based on the request of the SMF 2, where the UE ID list includes the identifier of the UE 1. It should be understood that the identifier of the UE 1 is stored by the UDM/NRF in S509. In another aspect, the SMF 2 registers the GEO SAT ID and the UE 2 ID with the UDM/NRF (where this is similar to S508), and subscribes to a change notification of the UE ID list from the UDM/NRF (where this is similar to S510).

Further, the SMF 2 sends an N4 session establishment request message to the GEO UPF, where the N4 session establishment request message includes the UE ID list, to indicate the GEO UPF to send, to a gNB corresponding to UE in the UE ID list, a packet whose destination address points to the UE. The UE ID list is used as an example. The GEO UPF sends, to the gNB 1, a data packet whose destination address is the UE 1 IP.

In another aspect, the UDM/NRF further sends a notification message to the SMF 1, where the notification message carries an updated UE ID list corresponding to the GEO SAT, and the updated UE ID list includes the UE 2 ID. Then, the SMF-1 initiates N4 session modification to the GEO UPF, where the N4 session modification carries the updated UE ID list.

Based on the foregoing solution, the SMF 1 may configure a forwarding rule for the GEO UPF, so that the GEO UPF sends, to a gNB corresponding to UE corresponding to the UE ID list, a data packet whose destination address is included in an address of the UE. In other words, for the UE in the UE ID list, a data packet sent to the UE may be directly sent by the GEO UPF to the corresponding gNB without using the ground PSA. Therefore, a data transmission path can be shortened, and a transmission delay can be reduced.

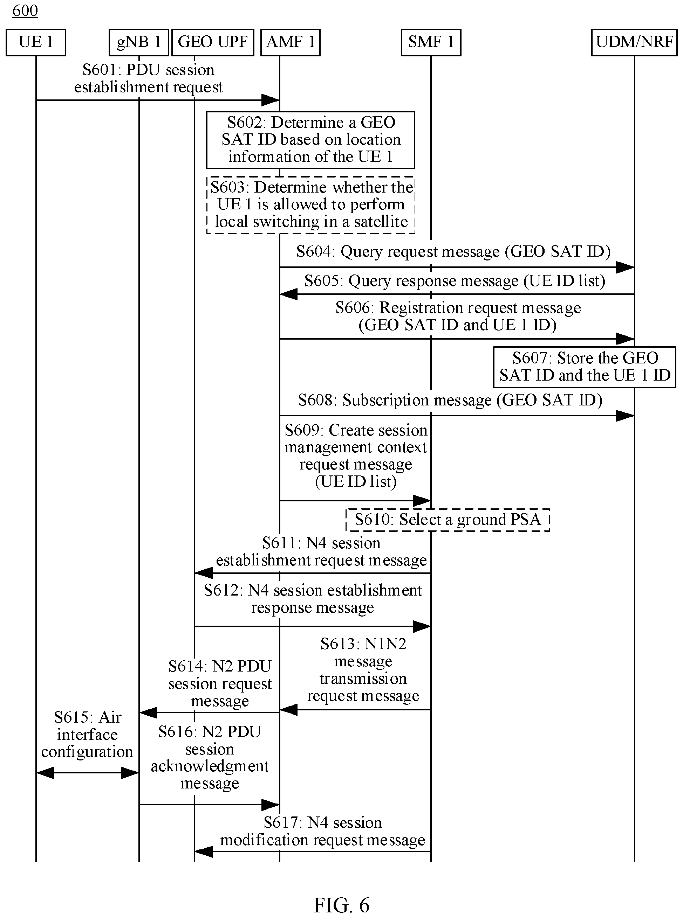

FIG. 6 is an example flowchart of a method 600 according to an embodiment of this application. The following provides example descriptions for the method 600 in combination with steps.

It should be understood that S601 and S602 are similar to S501 and S502 in the method 500. For brevity, details are not described herein again.

Optionally, in S603, an AMF 1 determines whether UE is allowed to perform local switching in a satellite.

In an implementation, the AMF 1 obtains subscription data of the UE 1 by using a UDM, and determines, based on the subscription data, whether the UE 1 is allowed to perform local switching (local switching) in the satellite.

In another implementation, the AMF 1 obtains policy information for the UE by using a PCF, and determines, based on the policy information, whether the UE 1 is allowed to perform local switching in the satellite.

S604: The AMF 1 sends a query request message to the UDM/an NRF, where the query request message includes a GEO SAT ID. Correspondingly, the UDM/NRF receives the query request message from the AMF 1.

S605: The UDM/NRF sends a query response message to the AMF 1, where the query response message includes a UE ID list. Correspondingly, the AMF 1 receives the query response message from the UDM/NRF.

Optionally, the AMF 1 further performs S606 to S608. Descriptions are as follows.

S606: The AMF 1 sends a registration request message to the UDM/NRF, where the registration request message includes the GEO SAT ID and a UE 1 ID. Correspondingly, the UDM/NRF receives the registration request message from the AMF 1.

S607: The UDM/NRF stores the GEO SAT ID and the UE 1 ID.

S608: The AMF 1 sends a subscription message to the UDM/NRF, where the subscription message includes the GEO SAT ID.

It should be understood that S604 to S608 are similar to S506 to S510 in the method 500. A difference lies in that S506 to S510 in the method 500 are performed by the SMF 1, and S604 to S608 are performed by the AMF 1. For brevity, a detailed process is not described again.

S609: The AMF 1 sends a create session management context request message to an SMF 1. Correspondingly, the SMF 1 receives the create session management context request message from the AMF 1.

For example, the create session management context request message includes the UE ID list.

It may be understood that in the method 600, a registration process may alternatively be performed by the SMF. In other words, S606 and S607 may not be performed. When S606 and S607 are not performed, the SMF 1 performs a registration process with the UDM/NRF after S610, to be specific, registers a correspondence between the GEO SAT ID and the UE 1 ID with the UDM/NRF. For specific descriptions, refer to S508 and S509. A brief description herein is as follows.

The SMF 1 sends a registration request message to the UDM/NRF. Correspondingly, the UDM/NRF receives the registration request message from the SMF 1. The registration request message includes the GEO SAT ID and the UE 1 ID.

After receiving the registration request message from SMF 1, the UDM/NRF stores the GEO SAT ID and UE 1 ID.

Further, S610 to S617 are similar to S504 and S511 to S517 in the method 500. For brevity, details are not described herein again.

Corresponding to the methods provided in the foregoing method embodiments, embodiments of this application further provides corresponding apparatuses. The apparatuses include corresponding modules configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

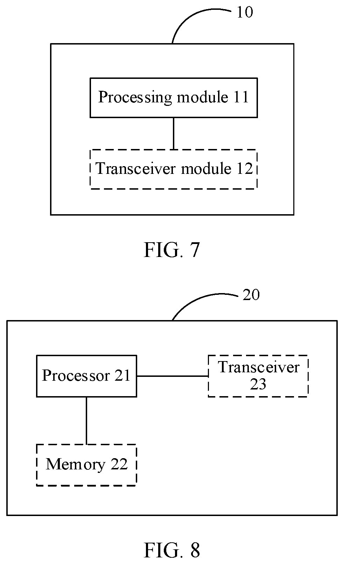

FIG. 7 is a schematic block diagram of a communication apparatus 10 according to an embodiment of this application. The apparatus 10 includes a processing module 11. Optionally, the apparatus 10 may further include a transceiver module 11. The processing module 11 is configured to perform data processing, and the transceiver module 12 may implement a corresponding communication function. In other words, the transceiver module 12 is configured to perform operations related to receiving and sending, and the processing module 11 is configured to perform an operation other than receiving and sending. The transceiver module 12 may also be referred to as a communication interface or a communication unit.

Optionally, the apparatus 10 may further include a storage module (not shown in the figure). The storage module may be configured to store instructions and/or data. The processing module 11 may read the instructions and/or the data in the storage module, so that the apparatus implements actions of the devices or the network elements in the foregoing method embodiments.

In a first design, the apparatus 10 may correspond to the network device in the foregoing method embodiments or may be a component (for example, a chip) of the network device, for example, a session management network element (for example, an SMF), a mobility management network element (for example, an AMF), or a data management network element (for example, a DUM or an NRF).

The apparatus 10 may implement the steps or procedures performed by the session management network element (for example, the SMF) in the foregoing method embodiments. The processing module 11 may be configured to perform the processing-related operations of the application session management network element (for example, the SMF) in the foregoing method embodiments. The transceiver module 12 may be configured to perform the operations related to sending and receiving of the session management network element (for example, the SMF) in the foregoing method embodiments.

For example, the apparatus 10 may correspond to the session management network element in the method 400 or the SMF in the method 500 and the method 600 in embodiments of this application. The apparatus 10 may include modules configured to perform the methods performed by the session management network element (or the SMF) in FIG. 4 to FIG. 6. In addition, the modules in the apparatus 10 and the foregoing other operations and/or functions are respectively used to implement corresponding procedures of the methods shown in FIG. 4 to FIG. 6.

In a possible design, the processing module 11 is configured to: obtain service information, where the service information indicates one or more services supported by a satellite; determine, based on the service information, whether a terminal device is allowed to access the service supported by the satellite; and when determining that the terminal device is allowed to access at least one of the services supported by the satellite, insert a user plane network element on the satellite into a user plane path of the terminal device.

The processing module 11 is configured to obtain an identifier list, where the identifier list includes identification information of one or more terminal devices that access the satellite in a satellite backhaul manner. The processing module 11 is configured to configure a forwarding rule for the user plane network element on the satellite, where the forwarding rule is used to offload, to an access network device corresponding to the terminal device, a data packet whose destination address is included in an address of the terminal device corresponding to the identifier list.

Optionally, the transceiver module 12 is specifically configured to receive the identifier list from a data management network element or a mobility management network element.

Optionally, the transceiver module 12 is further configured to send a request message to the data management network element, where the request message includes related information of the satellite, and the request message requests to obtain the identifier list.

Optionally, the transceiver module 12 is further configured to receive a session context establishment request message from the mobility management network element, where the session context establishment request message includes identification information of a first terminal device, and the first terminal device accesses the satellite in the satellite backhaul manner. The processing module 11 is further configured to obtain the related information of the satellite. The transceiver module 12 is further configured to send a registration message to the data management network element, where the registration message includes the identification information of the first terminal device and the related information of the satellite.

Optionally, the processing module 11 is further configured to determine that the first terminal device is allowed to perform local switching in the satellite.

Optionally, that the processing module 11 is specifically configured to obtain the related information of the satellite includes: The session management network element receives the related information of the satellite from the mobility management network element.

Optionally, the processing module 11 is specifically configured to determine the related information of the satellite based on location information of the terminal device.

Optionally, the transceiver module 12 is further configured to send a subscription message to the data management network element, where the subscription message includes the related information of the satellite, and the subscription message is used to subscribe to a change notification of the identifier list.

Optionally, the related information of the satellite may be any one of the following information: a data network access identifier corresponding to the satellite, an identifier of the satellite, and an internet protocol address of the satellite.

The apparatus 10 may implement the steps or procedures performed by the mobility management network element (or the AMF) in the foregoing method embodiments. The transceiver module 12 may be configured to perform the operations related to receiving and sending of the mobility management network element (or the AMF) in the foregoing method embodiments. The processing module 11 may be configured to perform the processing-related operations of the application mobility management network element (or the AMF) in the foregoing method embodiments.

For example, the apparatus 10 may correspond to the mobility management network element in the method 400 or the AMF in the method 500 and the method 600 in embodiments of this application. The apparatus 10 may include modules configured to perform the methods performed by the mobility management network element (or the AMF) in FIG. 4 to FIG. 6. In addition, the modules in the apparatus 10 and the foregoing other operations and/or functions are respectively used to implement corresponding procedures of the methods shown in FIG. 4 to FIG. 6.

In a possible implementation, the transceiver module 12 is configured to: receive, from a data management network element, an identifier list corresponding to related information of a satellite, where the identifier list includes identification information of one or more terminal devices that access the satellite in a satellite backhaul manner; and send the identifier list to a session management network element.

Optionally, the transceiver module 12 is further configured to send a request message to the data management network element, where the request message includes the related information of the satellite, and the request message requests to obtain the identifier list.

Optionally, the transceiver module 12 is further configured to receive a session establishment request message from a first terminal device, where the session establishment request message includes identification information of the first terminal device, and the first terminal device accesses the satellite in the satellite backhaul manner. The processing module 11 is further configured to determine the related information of the satellite based on location information of the first terminal device. The transceiver module 12 is further configured to send a registration message to the data management network element, where the registration message includes the identification information of the first terminal device and the related information of the satellite.

Optionally, the processing module 11 is further configured to determine that the first terminal device is allowed to perform local switching in the satellite.

Optionally, the transceiver module 12 is further configured to send a subscription message to the data management network element, where the subscription message includes the related information of the satellite, and the subscription message is used to subscribe to a change notification of the identifier list.

The apparatus 10 may implement the steps or procedures performed by the group management network element (or the UDM/NRF) in the foregoing method embodiments. The transceiver module 12 may be configured to perform the operations related to receiving and sending of the group management network element (or the UDM/NRF) in the foregoing method embodiments. The processing module 11 may be configured to perform the processing-related operations of the application group management network element (or the UDM/NRF) in the foregoing method embodiments.

For example, the apparatus 10 may correspond to the group management network element in the method 400 or the UDM/NRF in the method 500 and the method 600 in embodiments of this application. The apparatus 10 may include modules configured to perform the methods performed by the group management network element (or the UDM/NRF) in FIG. 4 to FIG. 6. In addition, the modules in the apparatus 10 and the foregoing other operations and/or functions are respectively used to implement corresponding procedures of the methods shown in FIG. 4 to FIG. 6.

In a possible implementation, the transceiver module 12 is configured to receive a request message from a first network element, where the request message includes related information of a satellite. The processing module 11 is configured to determine, based on the related information of the satellite, an identifier list corresponding to the related information of the satellite, where the identifier list includes identification information of one or more terminal devices that access the satellite in a satellite backhaul manner. The transceiver module 12 is further configured to send the identifier list to the first network element.

Optionally, the transceiver module 12 is further configured to receive a registration message from the first network element, where the registration message includes identification information of a first terminal device and the related information of the satellite. The processing module 11 is further configured to store the identification information of the first terminal device in the identifier list.

Optionally, the transceiver module 12 is further configured to receive a subscription message from the first network element, where the subscription message includes the related information of the satellite, and the subscription message is used to subscribe to a change notification of the related information of the satellite.

Optionally, the first network element is a session management network element or a mobility management network element.

It should be understood that a specific process in which the modules perform the foregoing corresponding steps is described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described function. In an optional example, a person skilled in the art may understand that the apparatus 10 may be specifically the mobility management network element in the foregoing embodiments, and may be configured to perform the procedures and/or steps corresponding to the mobility management network element in the foregoing method embodiments. Alternatively, the apparatus 10 may be specifically the terminal device in the foregoing embodiments, and may be configured to perform the procedures and/or steps corresponding to the terminal device in the foregoing method embodiments. To avoid repetition, details are not described herein again.

The apparatus 10 in each of the foregoing solutions has a function of implementing the corresponding steps performed by the network device (for example, the session management network element, the mobility management network element, or the data management network element) in the foregoing methods. The function may be implemented by hardware, or may be implemented by hardware executing corresponding software. The hardware or software includes one or more modules corresponding to the foregoing function. For example, the transceiver module may be replaced with a transceiver machine (for example, a sending unit in the transceiver module may be replaced with a transmitter machine, and a receiving unit in the transceiver module may be replaced with a receiver machine). Another unit such as the processing module may be replaced with a processor, to separately perform sending and receiving operations and a related processing operation in the method embodiments.

In addition, the foregoing transceiver module 12 may alternatively be a transceiver circuit (for example, may include a receiving circuit and a sending circuit), and the processing module may be a processing circuit.

It should be noted that an apparatus in FIG. 8 may be the network element or the device in the foregoing embodiments, or may be a chip or a chip system, for example, a system on chip (system on chip, SoC). The transceiver module may be an input/output circuit or a communication interface. The processing module is a processor, a microprocessor, or an integrated circuit integrated on the chip. This is not limited herein.

According to the foregoing method, FIG. 8 is a schematic diagram of a communication apparatus 20 according to an embodiment of this application. In a possible design, the apparatus 20 may correspond to the session management network element (or the SMF) in the foregoing method embodiments. In another possible design, the apparatus 10 may correspond to the mobility management network element (or the AMF) in the foregoing method embodiments.

The apparatus 20 may include a processor 21 (namely, an example of a processing module). The processor 21 is configured to perform the operations performed by the session management network element (for example, the SMF) or the mobility management network element (for example, the AMF) in the methods corresponding to FIG. 4 to FIG. 6. Optionally, the apparatus 20 may include a memory 22. The processor 21 may execute instructions stored in the memory 22, so that the apparatus 20 implements the operations performed by the session management network element (for example, the SMF) or the mobility management network element (for example, the AMF) in the methods corresponding to FIG. 4 to FIG. 6.

Further, the apparatus 20 may include a transceiver 23 (namely, an example of a transceiver module). Further, the processor 21, the memory 22, and the transceiver 23 may communicate with each other through an internal connection path, to transfer a control signal and/or a data signal. The memory 22 is configured to store a computer program. The processor 21 may be configured to invoke the computer program from the memory 22 and run the computer program, to control the transceiver 23 to receive a signal, control the transceiver 23 to send a signal, and complete the steps of the terminal device or the network device in the foregoing methods. The memory 22 may be integrated into the processor 21, or the memory 22 and the processor 21 may be disposed separately.

Optionally, if the communication apparatus 20 is a communication device, the transceiver 23 may include an input port and an output port. In other words, the transceiver 23 may be divided into a receiver and a transmitter. The receiver and the transmitter may be a same physical entity or different physical entities. When the receiver and the transmitter are a same physical entity, the receiver and the transmitter may be collectively referred to as a transceiver.

Optionally, if the communication apparatus 20 is a chip or a circuit, the input port is an input interface, and the output port is an output interface.

In an implementation, it may be considered that a function of the transceiver 23 is implemented by using a transceiver circuit or a dedicated transceiver chip. It may be considered that the processor 21 is implemented by using a dedicated processing chip, a processing circuit, a processor, or a general-purpose chip.

In another implementation, it may be considered that the communication device provided in this embodiment of this application is implemented by using a general-purpose computer. To be specific, program code for implementing functions of the processor 21 and the transceiver 23 is stored in the memory 22, and a general-purpose processor implements the functions of the processor 21 and the transceiver 23 by executing the code in the memory 22.

For concepts, explanations, detailed descriptions, and other steps of the apparatus 20 that are related to the technical solutions provided in embodiments of this application, refer to the descriptions of the content in the foregoing methods or other embodiments. Details are not described herein again.

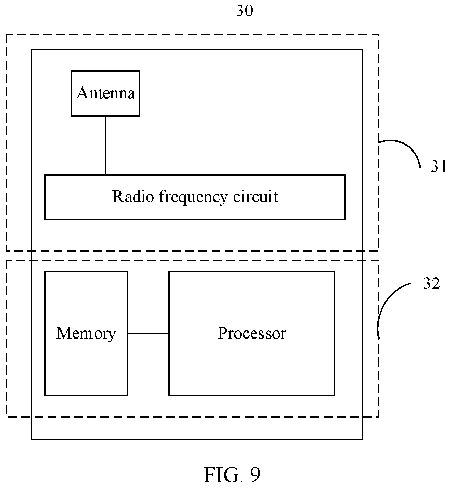

FIG. 9 is a simplified schematic diagram of a structure of a network device 30. The network device includes a part 31 and a part 32. The part 31 is mainly configured to: send and receive a radio frequency signal and perform conversion between the radio frequency signal and a baseband signal. The part 32 is mainly configured to: perform baseband processing, control the network device, and the like. The part 31 may be usually referred to as a transceiver module, a transceiver machine, a transceiver circuit, a transceiver, or the like. The part 32 is usually a control center of the network device, may be usually referred to as a processing module, and is configured to control the network device to perform a processing operation on a side of the network device in the foregoing method embodiments.

The transceiver module in the part 31 may also be referred to as a transceiver machine, a transceiver, or the like. The transceiver module includes an antenna and a radio frequency circuit, where the radio frequency circuit is mainly configured to perform radio frequency processing. For example, a component configured to implement a receiving function in the part 31 may be considered as a receiving module, and a component configured to implement a sending function may be considered as a sending module. That is, the part 31 includes the receiving module and the sending module. The receiving module may also be referred to as a receiving machine, a receiver, a receiving circuit, or the like. The sending module may be referred to as a transmitter machine, a transmitter, a transmitting circuit, or the like.

The part 32 may include one or more boards, and each board may include one or more processors and one or more memories. The processor is configured to read and execute a program in the memory to implement a baseband processing function and control the network device. If there are a plurality of boards, the boards may be interconnected with each other, to enhance a processing capability. In an optional implementation, the plurality of boards may share one or more processors, or the plurality of boards may share one or more memories, or the plurality of boards may simultaneously share one or more processors.

For example, in an implementation, the network device shown in FIG. 9 may be any network device shown in the methods shown in FIG. 4 to FIG. 6, for example, the mobility management network element.

The transceiver module in the part 31 is configured to perform the steps related to receiving and sending of any network device in the methods shown in FIG. 4 to FIG. 6. The transceiver module in the part 32 is configured to perform the processing-related steps of any network device in the methods shown in FIG. 4 to FIG. 6.

It should be understood that FIG. 9 is merely an example instead of a limitation. The foregoing network device including the transceiver module and the processing module may not depend on the structure shown in FIG. 9.

When the apparatus 30 is a chip, the chip includes a transceiver module and a processing module. The transceiver module may be an input/output circuit or a communication interface. The processing module is a processor, a microprocessor, or an integrated circuit integrated on the chip.

An embodiment of this application further provides a computer-readable storage medium. The computer-readable storage medium stores computer instructions used to implement the method performed by the network device in the foregoing method embodiments.

For example, when a computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the first device or the method performed by the second device in the foregoing method embodiments.

An embodiment of this application further provides a communication system. The communication system includes the network device in the foregoing embodiments.

For explanations and beneficial effects of related content of any one of the apparatuses provided above, refer to a corresponding method embodiment provided above. Details are not described herein again.

In this embodiment of this application, the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant communication software.

A specific structure of an execution body of the methods provided in embodiments of this application is not specifically limited in embodiments of this application, provided that a program that records code of the methods provided in embodiments of this application can be run to perform communication according to the methods provided in embodiments of this application. For example, the methods provided in embodiments of this application may be performed by a network device, or may be performed by a functional module that can invoke a program and execute the program in the network device.

Aspects or features of this application may be implemented as a method, an apparatus, or a product that uses standard programming and/or engineering technologies. The term "product" used in this specification may cover a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or the another programmable logic device, the discrete gate or the transistor logic device, or the discrete hardware component, the memory (storage module) may be integrated into the processor.

It should be further noted that the memory described in this specification aims to include but is not limited to these memories and any memory of another appropriate type.

A person of ordinary skill in the art may be aware that the units and steps in the examples described with reference to embodiments disclosed in this specification may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the protection scope of this application.

It may be clearly understood by a person skilled in the art that, for the purpose of convenient and brief description, for detailed working processes of the foregoing apparatuses and units, refer to corresponding processes in the foregoing method embodiments. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units, that is, may be located in one place, or may be distributed on a plurality of network units. Some or all of the units may be selected based on an actual requirement to implement the solutions provided in this application.

In addition, functional units in embodiments of this application may be integrated into one unit, or each unit may exist alone physically, or two or more units are integrated into one unit.

Some or all of the foregoing embodiments may be implemented by using software, hardware, firmware, or any combination thereof. When software is used to implement the embodiments, the some or all of the embodiments may be implemented in a form of a computer program product. The computer program product includes one or more computer instructions. When the computer program instructions are loaded and executed on a computer, some or all of the procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

Further embodiments of the present invention are provided in the following. It should be noted that the numbering used in the following section does not necessarily need to comply with the numbering used in the previous sections.
Embodiment 1. A satellite communication method, comprising:
   obtaining, by a session management network element, an identifier list, wherein the identifier list comprises identification information of one or more terminal devices that access a network in a satellite backhaul manner; and
   configuring, by the session management network element, a forwarding rule for a user plane network element on a satellite, wherein the forwarding rule is used to forward, to an internal interface, a data packet whose destination address is comprised in an address of the terminal device corresponding to the identifier list.
Embodiment 2. The method according to embodiment 1, wherein the obtaining, by a session management network element, an identifier list comprises:
   determining, by the session management network element, the identifier list based on a first identifier list of a terminal device that needs to perform communication and a second identifier list of the terminal device that accesses the network through satellite backhaul.
Embodiment 3. The method according to embodiment 2, further comprising:
   receiving, by the session management network element, the first identifier list from an application function network element.
Embodiment 4. The method according to embodiment 1, wherein the obtaining, by a session management network element, an identifier list comprises:
   receiving, by the session management network element, the identifier list from a data management network element.
Embodiment 5. The method according to embodiment 4, wherein before the receiving, by the session management network element, the identifier list from a data management network element, the method further comprises:
   sending, by the session management network element, a request message to the data management network element, wherein the request message comprises related information of the satellite, and the request message requests to obtain the identifier list.
Embodiment 6. The method according to embodiment 5, wherein the identifier list comprises identification information of a first terminal device, and the method further comprises:
   receiving, by the session management network element, a session context establishment request message from a mobility management network element, wherein the session context establishment request message comprises the identification information of the first terminal device, and the first terminal device accesses the satellite in the satellite backhaul manner;
   determining, by the session management network element, that the first terminal device is allowed to perform local switching in the satellite;
   obtaining, by the session management network element, the related information; and
   sending, by the session management network element, a registration message to the data management network element, wherein the registration message comprises the identification information of the first terminal device and the related information of the satellite accessed by the first terminal device.
Embodiment 7. The method according to any one of embodiments 4 to 6, wherein the method further comprises:
   sending, by the session management network element, a subscription message to the data management network element, wherein the subscription message comprises the related information, and the subscription message is used to subscribe to a change notification of the identifier list.
Embodiment 8. The method according to any one of embodiments 5 to 7, wherein the related information of the satellite is any one of the following information:
   a data network access identifier corresponding to the satellite, an identifier of the satellite, and an internet protocol address of the satellite.
Embodiment 9. The method according to any one of embodiments 1 to 8, wherein the terminal device is a terminal device that is allowed to perform local switching in the satellite.
Embodiment 10. The method according to any one of embodiments 1 to 9, wherein the satellite backhaul manner is geostationary orbit satellite backhaul.
Embodiment 11. A satellite communication method, comprising:
   receiving, by a data management network element, a request message from a first network element, wherein the request message comprises related information of a satellite;
   determining, by the data management network element based on the related information, an identifier list corresponding to the related information, wherein the identifier list comprises identification information of one or more terminal devices that access the satellite in a satellite backhaul manner; and
   sending, by the data management network element, the identifier list to the first network element.
Embodiment 12. The method according to embodiment 11, wherein the method further comprises:
   receiving, by the data management network element, a registration message from the first network element, wherein the registration message comprises identification information of a first terminal device and the related information; and
   storing, by the data management network element, the identification information of the first terminal device in the identifier list.
Embodiment 13. The method according to embodiment 11 or 12, wherein the method further comprises:
   receiving, by the data management network element, a subscription message from the first network element, wherein the subscription message comprises the related information, and the subscription message is used to subscribe to a change notification of the identifier list.
Embodiment 14. The method according to any one of embodiments 11 to 13, wherein the first network element is a session management network element or a mobility management network element.
Embodiment 15. The method according to any one of embodiments 11 to 14, wherein the satellite backhaul manner is geostationary orbit satellite backhaul.
Embodiment 16. A communication apparatus, wherein the apparatus comprises: a module configured to perform the method according to any one of embodiments 1 to 10, or a module configured to perform the method according to any one of embodiments 11 to 15.
Embodiment 17. A communication apparatus, comprising:
   a processor, configured to execute a computer program stored in a memory, to enable the apparatus to perform the method according to any one of embodiments 1 to 10, or enable the apparatus to perform the method according to any one of embodiments 11 to 15.
Embodiment 18. A computer program product, wherein the computer program product comprises instructions used to perform the method according to any one of embodiments 1 to 10, or the computer program product comprises instructions used to perform the method according to any one of embodiments 11 to 15.
Embodiment 19. A computer-readable storage medium, wherein the computer-readable storage medium stores a computer program; and when the computer program is run on a computer, the computer is enabled to perform the method according to any one of embodiments 1 to 10, or the computer is enabled to perform the method according to any one of embodiments 11 to 15.
Embodiment 20. A satellite communication system, comprising a session management network element and a user plane network element, wherein
   the session management network element is configured to: obtain an identifier list, wherein the identifier list comprises identification information of one or more terminal devices that access a network in a satellite backhaul manner; and configure a forwarding rule for the user plane network element on a satellite, wherein the forwarding rule is used to forward, to an internal interface, a data packet whose destination address is comprised in an address of the terminal device corresponding to the identifier list; and
   the user plane network element is configured to receive the forwarding rule from the session management network element.
Embodiment 21. The system according to embodiment 20, wherein that the session management network element is configured to obtain the identifier list comprises:
   determining, by the session management network element, the identifier list based on a first identifier list of a terminal device that needs to perform communication and a second identifier list of the terminal device that accesses the network through satellite backhaul.
Embodiment 22. The system according to embodiment 21, wherein
   the session management network element is further configured to receive the first identifier list from an application function network element.
Embodiment 23. The system according to any one of embodiments 20 to 22, wherein the satellite backhaul manner is geostationary orbit satellite backhaul.
Embodiment 24. A satellite communication method, comprising:
   obtaining, by a session management network element, an identifier list, wherein the identifier list comprises identification information of one or more terminal devices that access a network in a satellite backhaul manner;
   configuring, by the session management network element, a forwarding rule for a user plane network element on a satellite, wherein the forwarding rule is used to offload, to an internal interface, a data packet whose destination address is comprised in an address of the terminal device corresponding to the identifier list; and
   receiving, by the user plane network element, the forwarding rule from the session management network element.
Embodiment 25. The method according to embodiment 24, wherein the obtaining, by a session management network element, an identifier list comprises: determining, by the session management network element, the identifier list based on a first identifier list of a terminal device that needs to perform communication and a second identifier list of the terminal device that accesses the network through satellite backhaul.
Embodiment 26. The method according to embodiment 24 or 25, further comprising:
   inserting, by the session management network element, the user plane network element on the satellite into the terminal device.
Embodiment 27. The method according to any one of embodiments 24 to 26, wherein the satellite backhaul manner is geostationary orbit satellite backhaul

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A satellite communication method, comprising:
obtaining an identifier list, wherein the identifier list comprises identification information of one or more terminal devices that access a network in a satellite transmission manner; and
configuring a forwarding rule for a user plane network element on a satellite, wherein the forwarding rule is used to forward, to an internal interface of the user plane network element, data packets having destination addresses that are included in addresses of the terminal devices corresponding to the identifier list.

2. The method according to claim 1, wherein the identifier list comprises identification information of a first terminal device, and the first terminal device is allowed to perform local switching in the satellite.

3. The method according to claim 1 or 2, wherein the obtaining an identifier list comprises:
determining the identifier list based on a first identifier list of a terminal device that needs to perform communication and a second identifier list of the terminal device that accesses the network through satellite backhaul.

4. The method according to any one of claims 1 to 3, further comprising:
receiving the first identifier list from an application function network element.

5. The method according to any one of claims 1 to 4, wherein the obtaining an identifier list comprises:
receiving the identifier list from a data management network element.

6. The method according to claim 5, wherein before the receiving the identifier list from a data management network element, the method further comprises:
sending a request message to the data management network element, wherein the request message comprises related information of the satellite, and the request message requests to obtain the identifier list.

7. The method according to claim 6, wherein the related information of the satellite is any one of the following information:
a data network access identifier corresponding to the satellite, an identifier of the satellite, and an internet protocol address of the satellite.

8. The method according to any one of claims 1 to 7, wherein the satellite transmission manner is geostationary orbit satellite backhaul.

9. A satellite communication method, comprising:
receiving, by a user plane network element on a satellite, a forwarding rule from a session management network element;
forwarding, by the user plane network element to an internal interface of the user plane network element, data packets having destination addresses that are included in addresses of the terminal devices corresponding to the identifier list, wherein the identifier list comprises identification information of one or more terminal devices that access a network in a satellite transmission manner.

10. The method according to claim 9, wherein the identifier list comprises identification information of a first terminal device, and the first terminal device is allowed to perform local switching in the satellite.

11. The method according to claim 9 or 10, wherein the satellite transmission manner is geostationary orbit satellite backhaul.

12. An apparatus, wherein the apparatus is configured to perform the method according to any one of claims 1 to 8 or to perform the method according to any one of claims 9 to 11.

13. A computer readable storage medium comprising instructions which, when executed by a computer device, cause the computer device to perform the method according to any one of claims 1 to 8 or to perform the method according to any one of claims 9 to 11.

14. A computer program product, comprising instructions which, when executed by a computer device, cause the computer device to perform the method according to any one of claims 1 to 8 or to perform the method according to any one of claims 9 to 11.

15. A satellite communication system, comprising a session management network element configured to perform the method according to any one of claims 1 to 8, and a user plane network element on a satellite configured to perform the method according to any one of claims 9 to 11.
